# EUROPEAN PATENT APPLICATION

(11) **EP 4 773 636 A1**
(43) Date of publication of application: **08.07.2026**
(21) Application number: 26150004.5
(22) Date of filing: 02.01.2026
(51) Int. Cl.: H04W 4/70, H04W 68/00, H04L 69/22, H04L 69/324, H04W 80/02

(54) **METHOD AND DEVICE FOR AMBIENT IOT COMMUNICATION**

(30) Priority: 02.01.2025 KR 20250000561; 09.09.2025 KR 20250128647; 18.12.2025 KR 20250203374
(71) Applicant: KT Corporation, Seongnam-si, Gyeonggi-do 13606 (KR)
(72) Inventor: HONG, Sung-pyo, 13606 Seongnam-si, Gyeonggi-do (KR)
(74) Representative: BCKIP Part mbB

(57) **Abstract**

Provided are a method and device for ambient IoT communication in a wireless communication system. The device receives a paging message including first ambient internet of things (AIoT) device identification information, and forwards the first AIoT device identification information included in the paging message to an upper layer. Further, the device receives, from the upper layer, an indication regarding whether the first AIoT device identification information matches. The paging message includes a predetermined field, and based on the predetermined field, the first AIoT device identification information may be forwarded to the upper layer.

## Description

### CROSS-REFERENCE TO RELATED THE APPLICATION

This application is based on and claims priority on Patent Application No. 10-2025-0000561 filed on Jan. 2, 2025, No. 10-2025-0128647 filed on Sep. 9, 2025 and No. 10-2025-0203374 filed on Dec. 18, 2025 in the Korean Intellectual Property Office, the disclosures of which are incorporated by reference herein in their entirety.

### BACKGROUND

### Technical Field

The present disclosure relates to wireless communication applicable to 5G NR, 5G-Advanced and 6G.

### Description of the Related Art

With the increase in the number of communication devices, there is a consequent rise in communication traffic that needs to be managed. To handle this increased communication traffic, a next generation 5G system, which is an enhanced mobile broadband communication system compared to the exiting LTE system, has become necessary. Such a next generation 5G system has been developed based on scenarios classified as Enhanced Mobile BroadBand (eMBB), Ultra-reliable and low-latency communication (URLLC), Massive Machine-Type Communications (mMTC), and the like.

eMBB, URLLC, and mMTC represent next generation mobile communication scenarios. eMBB is characterized by high spectral efficiency, high user experienced data rate, high peak data. URLLC is characterized by ultra-reliability, ultra-low latency, ultra-high availability (e.g., vehicle-to-everything (V2X), Emergency Service, Remote Control). mMTC is characterized by low cost, low energy consumption, short packet transmission, and massive connectivity (e.g., Internet of Things (IoT)).

### SUMMARY

The disclosure provides a method and device for efficiently providing ambient IoT communication in a wireless communication system.

According to an embodiment, an operation method of a device in a wireless communication system may be provided. The method of the device may include receiving a paging message including first ambient internet of things (AIoT) device identification information, forwarding the first AIoT device identification information included in the paging message to an upper layer, and receiving, from the upper layer, an indication regarding whether the first AIoT device identification information matches, wherein the paging message includes a specific field, and based on the specific field, the first AIoT device identification information is forwarded to the upper layer.

According to another embodiment, a device may be provided in a wireless communication system. The terminal may include at least one processor; and at least one memory configured to store instructions and operably electrically connectable to the at least one processor, wherein operations performed based on the instructions executed by the at least one processor include: receiving a paging message including first ambient internet of things (AIoT) device identification information, forwarding the first AIoT device identification information included in the paging message to an upper layer, and receiving, from the upper layer, an indication regarding whether the first AIoT device identification information matches, wherein the paging message includes a specific field, and based on the specific field, the first AIoT device identification information is forwarded to the upper layer.

The specific field may indicate presence of the first AIoT device identification information in the paging message. At the upper layer, whether the first AIoT device identification information matches may be checked. Based on a result of the checking, an indication regarding whether the first AIoT device identification information matches may be received.

Meanwhile, the paging message may further include a security parameter. Here, the first AIoT device identification information may include one of permanent AIoT device identification information, first security-protected identification information, and filtering information, and second security-protected identification information may be generated using the security parameter. The matching of the first AIoT device identification information may be a matching between the first security-protected identification information and the second security-protected identification information.

Based on reception of the indication regarding whether the first AIoT device identification information matches, the device may initiate contention-based random access or contention-free access. To this end, the paging message may further include information indicating the contention-based random access or the contention-free access.

Thereafter, the device may transmit an upper layer message, and the upper layer message may include at least one of second AIoT device identification information and a security parameter calculated by the device.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIGS. 7A to 7B illustrate examples of connectivity topologies for an ambient IoT network and a device.
FIG. 8 illustrates an example of a procedure for an A-IoT inventory service.
FIG. 9 illustrates an example of an access stratum (AS) procedure between an A-IoT device and a reader.
FIGS. 10A to 10B illustrate A-IoT access procedures to which one embodiment of the present specification may be applied.
FIG. 11 is a block diagram showing apparatuses according to an embodiment of the disclosure.
FIG. 12 is a block diagram showing a terminal according to an embodiment of the disclosure.
FIG. 13 is a block diagram of a processor in accordance with an embodiment.
FIG. 14 is a detailed block diagram of a transceiver of a first apparatus shown in FIG. 11 or a transceiving unit of an apparatus shown in FIG. 12.

### DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

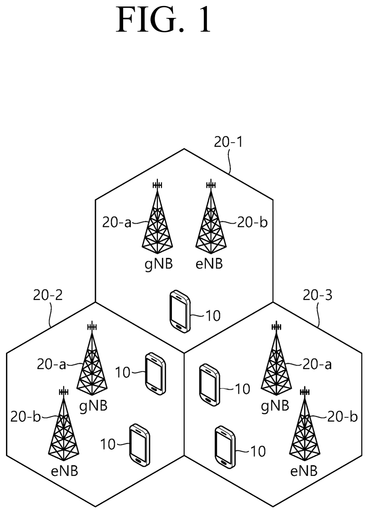

**FIG. 1** **is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

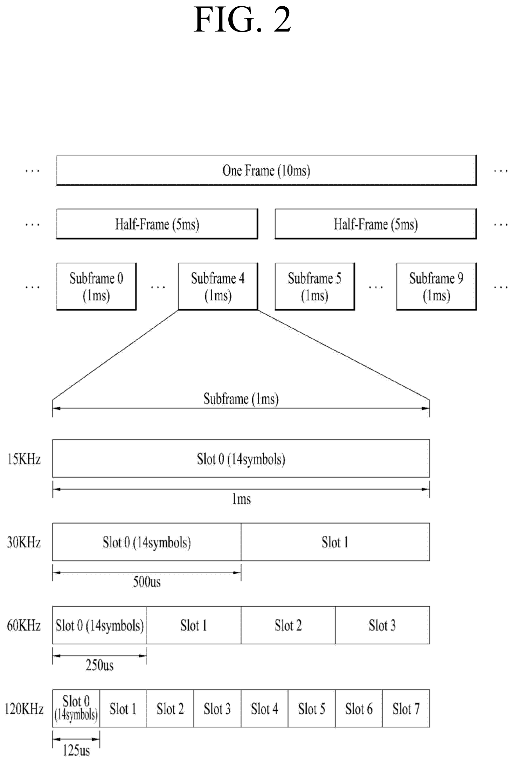

**FIG. 2** **is a diagram illustrating a structure of a radio frame used in new radio** (NR).

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) according to each numerology expressed by µ in the case of a normal CP.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

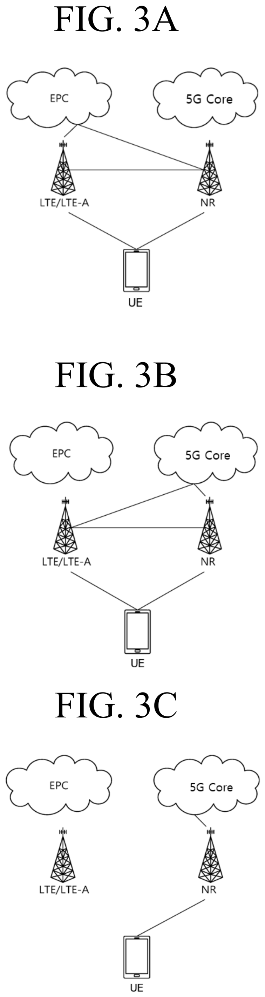

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

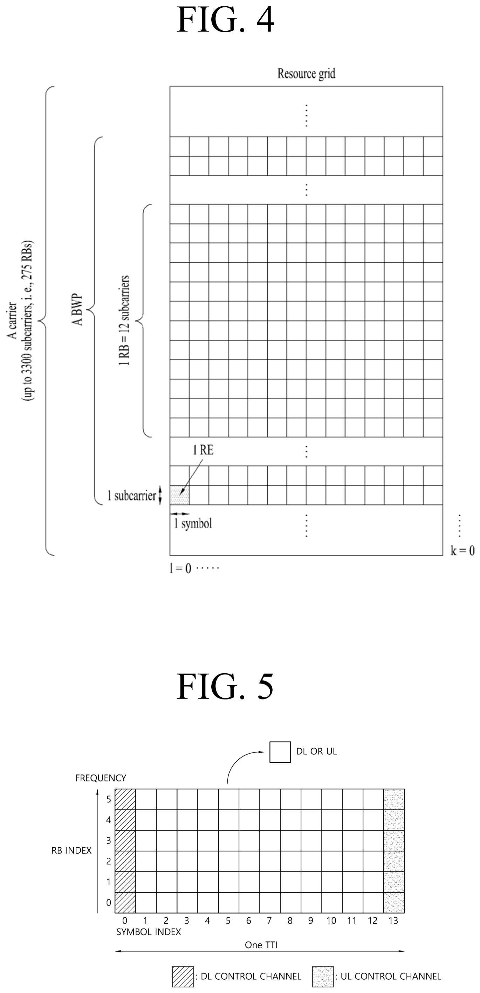

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

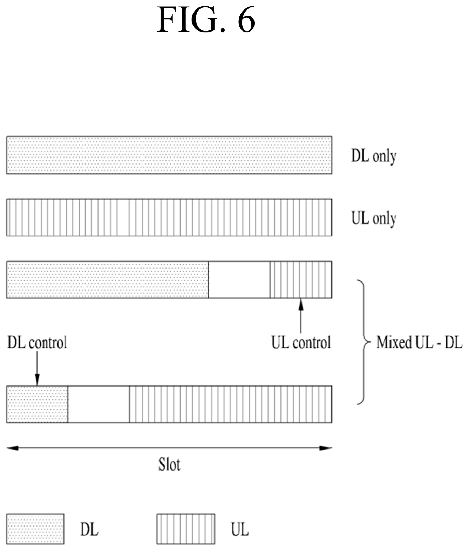

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some symbols within a subframe that transition from DL to UL mode may be configured as the GP.

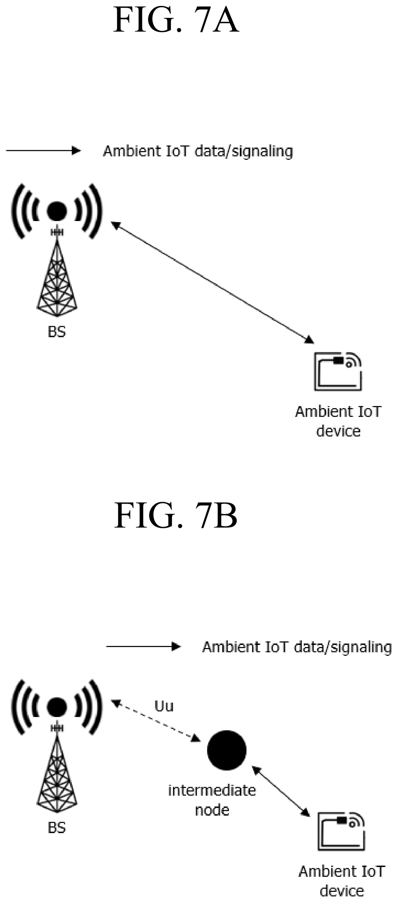

**FIGS. 7A to 7B** **illustrate examples of connectivity topologies for an ambient IoT network and a device.**

An ambient Internet of Things (ambient Internet of Things or ambient power-enabled Internet of Things: A-IoT/AloT) device is an IoT device powered by energy harvesting and having no battery or having limited energy storage capability (for example, using a capacitor). For convenience of description, an AIoT device may hereinafter be referred to as a device. This is merely for convenience of description, and the name may be changed to any other term.

Energy is provided through energy harvesting from radio waves, light, motion, heat, or other suitable power sources. Energy harvesting may be continuous (for example, by vibration) or may occur intermittently. Accordingly, it cannot be assumed that an AIoT device always has power available for data transmission and reception.

An AIoT device needs to be designed to have lower complexity, smaller size, reduced capability, and lower power consumption than previously defined 3GPP IoT terminals/devices (for example, NB-IoT (Narrowband Internet of Things) or eMTC (enhanced Machine Type Communication) devices). An AIoT device may be designed to have a lifetime of more than 10 years without maintenance. Accordingly, AIoT devices may replace existing 3GPP IoT devices or support various use cases (for example, inventory, sensors, positioning, and commands) that cannot be supported by existing 3GPP IoT devices.

Functions and procedures for supporting ambient IoT use cases may be defined as AIoT services (for example, an inventory service and a command service). For example, a main purpose of the inventory service is to search for goods (for example, boxes, containers, packages, or tools) present in a specific area. When a request is transmitted within a network for a specific area, AIoT devices attached to such goods report identifiers associated with the goods, and additional information such as status, measurement results, and/or location may be added by the AIoT devices and/or an AIoT RAN (Radio Access Network)/reader. Through the inventory service, AIoT devices within a predetermined range of a specific reader may be discovered and/or tracked.

A command service represents a procedure for executing commands for AIoT devices located in a specific area. The commands may include, for example, read, write, disable, and/or enable services.
- Read: a request to read information from an AIoT device.
- Write: a request to write information to an AIoT device.
- Disable: a request to permanently or temporarily disable an RF transmission capability of an AIoT device.
- Enable: a request to enable an AIoT device that has been temporarily disabled.

Connectivity topologies such as those shown in FIGS. 7A to 7B may be defined for an ambient Internet of Things (AIoT) network and devices. In FIG. 7A, a BS represents an ambient IoT Radio Access Network (RAN). The AIoT RAN represents a node that performs specific functions for AIoT as part of a functional split between a Radio Access Network (RAN) and a Core Network (CN), for example, a RAN node function that includes control of A-IoT radio resources used by an A-IoT device. The AIoT RAN may serve one or more AIoT readers. An AIoT reader represents a reader that terminates an AIoT protocol with an AIoT device. For convenience of description, the node may hereinafter be referred to as an AIoT RAN (or an AIoT reader). This is merely for convenience of description, and the node may be denoted by any other term, such as an AIoT RAN reader, an AIoT base station, or an AIoT BS reader.

In all of these topologies, a carrier may be provided to an AIoT device from another node inside or outside the topology. Links in each topology may be bidirectional or unidirectional. In FIG. 7A, an AIoT device communicates directly and bidirectionally with a base station. Communication between the base station and the AIoT device may include AIoT data and/or signaling. A base station that transmits to the AIoT device and a base station that receives from the AIoT device may be the same base station or may be different base stations.

In FIG. 7B, an AloT device performs bidirectional communication with an AloT RAN via an intermediate node/assisting node/assisting UE. In this topology, the intermediate node/assisting node/assisting UE may be a relay, an integrated access and backhaul (IAB) node, a UE, a repeater, or the like, which is capable of ambient IoT functions and/or services. For convenience of description, the node may hereinafter be referred to as a UE reader. This is merely for convenience of description, and the node may be denoted by any other term, such as a UE connected to or associated with an AIoT-enabled RAN, an AloT-enabled RAN/reader, an AIoT reader, or an AIoT UE reader.

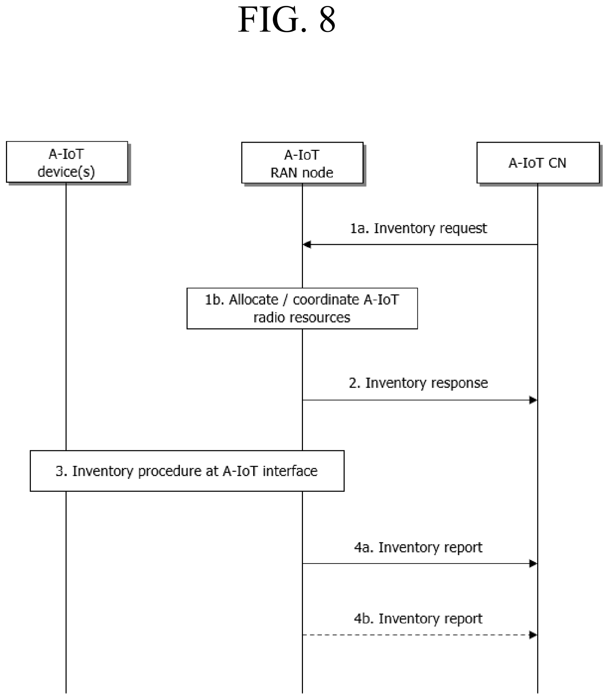

**FIG. 8** **illustrates an example of a procedure for an A-IoT inventory service.**

With reference to FIG. 8, a procedure for an AIoT inventory service is described below.
1a. The A-IoT CN sends an inventory request message to an A-IoT RAN node.
1b. The A-IoT RAN node allocates and coordinates usage of A-IoT radio resources.
2. The A-IoT RAN node sends an inventory response message to the A-IoT CN.
3. The A-IoT RAN node performs an inventory procedure toward one or more A-IoT devices over an A-IoT radio interface.
4a/4b. After receiving inventory results from the one or more A-IoT devices, the A-IoT RAN node may transmit one or more inventory reports to the A-IoT CN, the inventory reports including the received inventory results.

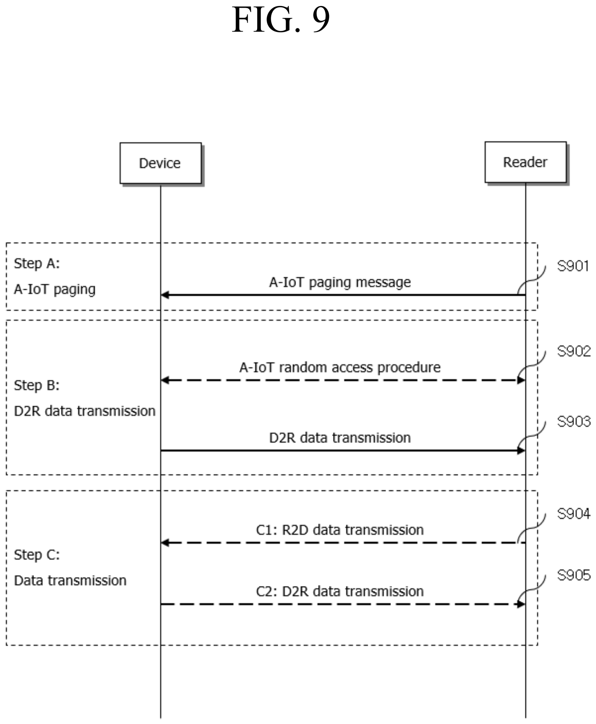

**FIG. 9** **illustrates an example of an access stratum (AS) procedure between an A-IoT device and a reader.**

With reference to FIG. 9, an overall access stratum (AS) procedure between an ambient Internet of Things (A-IoT) device and a reader is described below.

### Step A: A-IoT Paging (S901)

Based on a service request, the reader transmits an A-IoT paging message indicating one or more devices that are required to respond. In this case, the A-IoT paging message may be used interchangeably with an initial trigger message.

### Step B: D2R (Device-to-Reader) Data Transmission (S902-S903)

One or more A-IoT devices triggered by the paging perform transmission of a device identity (ID) to the reader by performing an A-IoT random access procedure or without performing the A-IoT random access procedure. Thereafter, D2R data is transmitted to the reader.

### Step C1: R2D (Reader-to-Device) Data Transmission (S904)

A possible R2D data transmission is performed, for example, for transmitting a command.

### Step C2: D2R Data Transmission (S905)

A possible D2R data transmission is performed, for example, for transmitting a corresponding response to the command.

Accordingly, although high-level procedures for providing an inventory service or a command service have been defined, detailed operations between an AIoT device and an AIoT RAN/reader for supporting AIoT services have not been specified, and thus AIoT services could not be implemented. In particular, to support such services, ambient IoT communication methods of an AIoT device (for example, interaction operations between protocol layers/entities) need to be specifically defined; however, no concrete techniques have been provided.

For AIoT devices configured to support lower complexity, smaller size, reduced capability, and lower power consumption compared to existing 3GPP LPWA (Low-Power Wide-Area) IoT, no specific ambient IoT communication methods (for example, methods for supporting interactions between protocol layers/entities) have been defined.

To address these problems, the present disclosure proposes specific ambient IoT communication methods for an AIoT device that supports lower complexity, smaller size, reduced capability, and lower power consumption than existing 3GPP LPWA IoT, and an apparatus therefor. By way of example, the proposed methods may include interaction methods between an Access Stratum (AS) of the AIoT device and an upper layer (for example, an AIoT Non-Access Stratum (NAS) or an AIoT application).

Hereinafter, data transmission and reception methods based on 5GS (Fifth Generation System) and NR technologies are described in detail. However, this is merely for convenience of description, and the present disclosure may be applied based on any system or any radio access technology (for example, 6G). Embodiments described in the present disclosure may refer to information elements and operation details specified in NR/5GS standards (for example, TS 38.321 as an NR MAC specification, TS 38.331 as an NR RRC specification, and TS 23.501 as a system architecture specification). Even if definitions of such information elements and related terminal operations are not described in the present specification, corresponding contents specified in standard specifications as well-known technologies may be included in the present disclosure.

Any function described below may be defined as an individual terminal capability (for example, a UE radio capability or a UE core network capability) and may be transmitted by a terminal to a base station or a core network entity (for example, an AMF (Access and Mobility Management Function), an SMF (Session Management Function), or an AIoTNF (Ambient IoT Network Function)) through corresponding signaling. Alternatively, multiple functions may be combined or aggregated and defined as a terminal capability, and may be transmitted by the terminal to the base station or the core network entity through corresponding signaling. Herein, an AIoTF (Ambient IoT Function or Ambient IoT Network Function) represents a network function for providing management and control of AIoT services and AIoT operations. This is merely for convenience of description, and the name may be changed to any other term. The AIoTF may select an AIoT RAN node (or a UE reader). The AIoTF may receive an AIoT service request from an application function or an application server and trigger an AIoT RAN/reader (or an AIoT UE reader) to perform AIoT device operations and AIoT service operations. The AIoTF may collect AIoT service operation results from the AIoT RAN node (or the AIoT UE reader) and transmit the collected results to the application function or the application server.

An ambient IoT device may be classified and defined into at least one device type or category according to at least one supported capability or a combination of at least one capability. For example, according to an energy storage capacity, devices may be classified into a device having no energy storage, a device having an energy storage capacity up to a specific value (up to E1 Joules), and a device having an energy storage capacity up to another specific value (up to E2 Joules, where E2 > E1). As another example, devices may be classified into a device having no energy storage and no independent signal generation or amplification (for example, backscatter transmission) (hereinafter referred to as Device A for convenience of description), a device having an energy storage unit but no independent signal generation (for example, backscatter transmission) (hereinafter referred to as Device B for convenience of description), wherein use of stored energy in Device B may include amplification of a reflected signal, and a device having an energy storage unit and independent signal generation (for example, active RF components for transmission) (hereinafter referred to as Device C for convenience of description). As another example, devices may be classified into a device having approximately 1 µW peak power consumption, having energy storage, having no amplification in both downlink (DL) and uplink (UL) within the device, and performing uplink transmission by backscattering on an externally provided carrier wave (hereinafter referred to as Device 1 for convenience of description); a device having peak power consumption of less than or equal to a few hundred µW, having energy storage, having amplification in both DL and UL within the device, and performing uplink transmission by backscattering on an externally provided carrier wave (hereinafter referred to as Device 2a for convenience of description); and a device having peak power consumption of less than or equal to a few hundred µW, having energy storage, having amplification in both DL and UL within the device, and performing uplink transmission using a carrier wave internally generated by the device (hereinafter referred to as Device 2b for convenience of description).

An AIoT RAN/reader/base station/UE reader or an AIoTF may transmit, indicate, or configure information or messages to an AIoT device to instruct enabling, activation, allowance, support, and/or configuration of any function or any combination of functions described below. For example, such information or messages may be transmitted from the AIoTF to the AIoT device through an AIoT NAS message or container. Alternatively, such information or messages may be transmitted to the AIoT device through a dedicated MAC PDU by an AIoT RAN/reader/base station/UE reader.

An AIoT RAN/reader/base station/UE reader or an AIoTF may transmit, indicate, or configure information or messages to an AIoT device for disabling, deactivating, restricting, and/or controlling any function or any combination of functions described below. For example, a prohibit, suspend, or deactivate timer for operation of a corresponding function may be indicated. The timer may be started or restarted at initiation of the corresponding function or before or after initiation of the corresponding function. While the timer is running, the device may be disabled, deactivated, restricted, or controlled so as not to initiate or perform the corresponding function.

Embodiments and corresponding functions described below may be performed independently. Alternatively, the embodiments and functions described below may be arbitrarily combined or aggregated and implemented, and it is apparent that such implementations are also included within the scope of the present invention.

Any information described below may be traffic characteristic information obtained, calculated, or derived statistically or empirically by a terminal or a network (for example, arbitrary statistics or statistical values such as an expected value/average, variance, standard deviation, minimum, or maximum). Accordingly, any information included in the present specification may represent at least one of an average (expected value), a minimum, a maximum, or a standard deviation. This is merely for convenience of description, and all information in the present specification may be used as statistical information. Any information described below may be pre-configured in a device or a network, or may be provisioned through OAM (Operations, Administration, and Maintenance), an application server, an application function, AIoT, UDM (Unified Data Management), and/or ADM (AIoT Data Management).

Hereinafter, a physical channel for R2D (Reader to Device) data transmission is referred to as a PRDCH (Physical Reader to Device Channel), a physical channel for D2R (Device to Reader) data transmission is referred to as a PDRCH (Physical Device to Reader Channel), and an interface/link between a reader and a device is referred to as an RD interface/link (for example, an AIoT radio interface). This is merely for convenience of description, and may be replaced with any other term.

Hereinafter, RD/DR link resource and scheduling information may include at least one of:
a start time/subframe/slot/symbol/reference time/arbitrary AIoT device unit time (for RD/DR link communication);
a start time/subframe/slot/symbol/reference time/arbitrary AIoT device unit time offset (for RD/DR link communication);
a start time/subframe/slot/symbol based on a specific reference time/point (for example, R2D data reception, start of R2D data reception, end of R2D data reception, or a serving base station/cell-specific reference time serving the corresponding reader);
a start time/subframe/slot/symbol offset based on a specific reference time (for RD/DR link communication);
a duration (for RD/DR link communication);
a transmission occasion (for an RD/DR link);
a transmission period (for an RD/DR link);
available time slots;
an available time-slot range;
a maximum number of time slots;
an uplink/downlink start time/subframe/slot/symbol and/or a start time/subframe/slot/symbol offset of an associated base station or assisting terminal for indicating an RD link start time;
frequency-domain information of an RD link;
an RD link subchannel number/index;
a DR link frequency offset;
an RD/DR link MCS;
an RD/DR link transport block size;
a communication range;
location information;
a priority;
a number of retransmissions for an RD/DR link; and
a validity period/time and/or a validity criterion (for RD/DR link communication).

### Identifier Checking at an Upper Layer (NAS/Data/Application)

For example, a MAC header (or a MAC subheader if MAC supports multiplexing) included in a MAC (Medium Access Control) PDU (Protocol Data Unit) for an AS (Access Stratum) AIoT service procedure between an AIoT device and an AIoT RAN/reader may not include an explicit AIoT device identification information field containing AIoT device identification information. As an example, a paging message for indicating paging for all AIoT devices (within the corresponding reader coverage) may not include an AIoT device identification information field.

Typically, if AIoT device identification information is not included in a MAC header/subheader, the MAC layer/entity of an AIoT device is unable to check (via the corresponding MAC PDU header) whether the AIoT device should respond to the corresponding AIoT MAC PDU. For example, the MAC layer/entity may check whether the corresponding AIoT device identification information matches (via the corresponding MAC PDU header). If AIoT device identification information is not included in the MAC header/subheader, the MAC layer/entity of the AIoT device is unable to determine whether to forward data/information included in the corresponding MAC PDU/SDU (Service Data Unit)/header to an upper layer (via the corresponding MAC PDU header).

An AIoT device (or MAC layer/entity) may determine a MAC PDU to be forwarded to an upper layer based on specific/arbitrary MAC header/subheader information/fields other than AIoT device identification information, and forward/transmit the corresponding MAC SDU (or a NAS message for an AIoT service request or AIoT service request data) or the corresponding MAC header information to an upper layer (AIoT NAS layer or AIoT data/application layer). Alternatively, an AIoT device (or MAC layer/entity)) may forward/transmit a MAC SDU (or the corresponding information) including information within a paging message/MAC-PDU/MAC-SDU (or a paging message including a NAS message/container, or a NAS message/container) to an upper layer. For example, at least one piece of information among AIoT device identification information and a security parameter, and any information/field/parameter included in a MAC header may be forwarded/transmitted to an upper layer. As an example, a paging message for all AIoT devices may exclude an AIoT device identification information field. To distinguish this, the paging message may include an information field for indicating the inclusion/presence of AIoT device identification information. An AIoT device receiving a paging message for all AIoT devices may provide at least one piece of information included in the corresponding paging message (e.g., a security parameter) to an upper layer for a paging response.

A NAS message/container/parameter may include at least one of AIoT device identification information and a security parameter. A MAC PDU may include a field for indicating whether a NAS message/container/parameter is included, a NAS message/container/parameter field, information for indicating the inclusion/presence of AIoT device identification information (information for indicating the inclusion/presence of AIoT device identification information and the length information of the corresponding device identification information), a field for indicating whether a paging message is included, a paging message/container field, a field for indicating whether security processing has been performed (e.g., a field for indicating whether a security parameter is included), and a field for indicating a security parameter (e.g., a random number (RAND_Network) generated by the core network for device authentication and/or device identifier security/privacy protection processing, and the type/method of security/privacy protected AIoT device identifier processing), and may include at least one of these fields. If one or more of the corresponding information/fields are included/set in a MAC header/subheader (or according to a pre-configured criterion/rule/configuration), the corresponding MAC SDU (and/or any/specific information included in the corresponding MAC PDU/header/subheader (e.g., AIoT service type, AIoT device identification information included in the corresponding paging message, that the AIoT device is selected for a paging response as a paging message for all AIoT devices, and/or a security parameter included in the corresponding paging message) may be forwarded/transmitted to an upper layer. As an example, at least one piece of information among AIoT device identification information and a security parameter, and any information/field/parameter included in a MAC header may be forwarded/transmitted to an upper layer.

If AIoT device identification information (or security processed/protected AIoT device identification information therefor) within a received MAC header/SDU (or NAS message/container) matches (or is the same as) the corresponding AIoT device identification information (or security processed/protected AIoT device identification information) of the AIoT device, the AIoT device (or NAS layer/entity) may perform at least one of the following operations (or if the AIoT device (or NAS layer/entity) receives a NAS message/container (or AIoT device identification information, a security parameter), it may perform at least one of the following operations). The order of the following operations represents an example, and they may be performed in any order different from the following order.

Security release/verification/processing on the corresponding AIoT device identification information may be performed using the corresponding AIoT device identification information and/or a security parameter and/or payload information in the NAS message/container and/or any field information included in the NAS message. As an example, if a paging message included a security processed/protected AIoT device identifier for a single device, ciphered/encrypted/protected AIoT device identification information may be generated using a security parameter received via the paging message. If the generated ciphered/encrypted/protected AIoT device identification information matches the ciphered/encrypted/protected AIoT device identification information received via the paging message, the AIoT device may consider itself to be selected.

If the security protected/released AIoT device identification information matches (or is the same as) the security protected/released AIoT device identification information of the corresponding AIoT device received via a paging message, indication information therefor may be indicated to a lower layer (MAC)/upper layer (AIoT data/application layer).

Payload information in the corresponding MAC/NAS message/container (and/or any field information included in the NAS message and/or any field information included in the MAC/NAS message/container which has been security protected/released/verified) may be indicated to an upper layer (AIoT data/application layer).

Information received from a MAC layer and at least one of payload information in the corresponding MAC/NAS message/container (and/or any field information included in the MAC/NAS message and/or any field information included in the MAC/NAS message/container (or information which has been security protected/released/verified using the information)) may be stored as a device variable. For example, at least one of the security protected/released AIoT device identification information and a security parameter of the corresponding AIoT device received via a paging message may be stored.

An AIoT service response message of a NAS layer for an AIoT service request message triggered in the corresponding NAS layer may be generated/constructed.

A NAS response message for the corresponding AIoT service request may be generated/constructed. Security protection/release/verification processing may be performed on the corresponding NAS response message (or a field included in the corresponding NAS response message or information for identifying an AIoT device included in the corresponding NAS response message). The corresponding NAS response message (or a D2R MAC message including the corresponding NAS response message) may include at least one of AIoT service type information, AIoT device identification information, and a security parameter. As an example, the corresponding NAS response message may include security protected/encrypted AIoT device identification information for the corresponding AIoT device identification information (e.g., a temporary device identifier which is security protected/encrypted, generated based on a random number (RAND_Network) received from the core network and a device identifier). Alternatively it may include a security parameter used for security protection/processing for the corresponding AIoT device (e.g., at least one of a verification value/result value/response value (RES: Result / XRES: Expected Result) generated/derived at an AIoT device and a random number (RAND_Device) generated/derived at an AIoT device).

Indication information about a processing result (e.g., ID matching) may be indicated from an AIoT device (or NAS layer/entity) to a lower layer (e.g., MAC layer). For example, the indication information may be provided to initiate an AIoT random access procedure. Or, an AIoT random access procedure may be initiated.

Payload information in the corresponding NAS message/container (and/or any field information included in the NAS message) may be indicated to a lower layer (MAC data/application layer).

A response message for the corresponding service request may be received from an (AIoT data/application layer).

A response message for the corresponding request may be provided to a lower layer by an indication/request from the lower layer.

If information for identifying an AIoT device within a received MAC SDU (or NAS message/container) does not match information for identifying the AIoT device, the AIoT device (or NAS layer/entity) may discard/delete/remove the corresponding MAC-SDU/NAS message/container. The AIoT device (or NAS layer/entity) may indicate to a lower layer whether the AIoT device identification information matches and/or whether the corresponding MAC-SDU/NAS message/container is discarded/deleted/removed. It may be indicated to the lower layer that the corresponding paging identifier did not match.

To determine whether information for identifying an AIoT device within a received MAC header/SDU (or NAS message/container) matches information for identifying the AIoT device, an AIoT device (or NAS layer/entity) may perform security protection/release (e.g., protection/cyphering/decyphering/decryption, integrity protection/verification, Message Authentication Code verification, hash function) processing on a MAC/NAS message/container (or a specific field included in the MAC/NAS message/container, or AIoT device identification information included in the MAC/NAS message/container). For this, a security parameter included in the MAC/NAS message/container may be used.

### Identifier Checking at a MAC Layer

A MAC header (or a MAC subheader if MAC supports multiplexing) included in a MAC PDU for an AS (Access Stratum) AIoT service procedure between an AIoT device and an AIoT RAN/reader may include an explicit AIoT device identification information field containing AIoT device identification information. As an example, a paging message for indicating paging for a single AIoT device or a group of AIoT devices may include an explicit AIoT device identification information field. If AIoT device identification information included in a MAC header/subheader matches (or is the same as) the AIoT device identification information of the AIoT device, the AIoT device (or its MAC layer/entity) may perform at least one of the following operations. The order of the following operations represents an example, and the operations may be performed in any order different from the following order.

If an AIoT service type (and/or a D2R response/transmission request/need/indication including a device identifier and/or upper layer data) requires an AIoT service/data response/transmission from an AIoT device (e.g., an AIoT service requiring D2R data transmission (e.g., inventory)), or if an AIoT service/data response/transmission is indicated as being required through one or more fields on an R2D MAC PDU, or if subsequent R2D data transmission is requested through one or more fields on an R2D MAC PDU, the corresponding indication information and/or the corresponding MAC SDU may be forwarded/transmitted to an upper layer (e.g., AIoT NAS layer or AIoT data/application layer).

A response message for the corresponding service request, related indication information, and/or AIoT data may be received from an upper layer (e.g., AIoT NAS layer or AIoT data/application layer).

An AIoT random access procedure may be initiated. For example, a random access type (e.g., contention-free or contention-based) and access occasion/resource determination, 16-bit random ID generation, and AIoT message1 (MSG1) transmission may be performed.

At least one piece of information, among payload information in the corresponding MAC/NAS message/container, any field information included in the MAC/NAS message, any field information included in the MAC/NAS message/container (or information which has been security protected/released therefor), and MAC header information included in the corresponding MAC PDU may be transmitted to an upper layer.

The upper layer may store, as a device variable, at least one of information received from the MAC layer and payload information in the corresponding NAS message/container (and/or any field information included in the NAS message and/or any field information included in the NAS message/container (or information which has been security protected/released therefor)). For example, at least one of the security protected/released AIoT device identification information and a security parameter of the corresponding AIoT device received via a paging message may be stored.

When a response message and/or AIoT data for the corresponding service request is received from an upper layer (e.g., AIoT NAS layer or AIoT data/application layer), an AIoT MSG1 may be transmitted including the AIoT NAS response message and/or AIoT data in addition to a random ID generated by the AIoT device.

Alternatively, D2R data transmission may be performed without using an AIoT random access procedure. As an example, if a MAC PDU for paging (e.g., a paging message including an AIoT service request NAS message or a paging MAC PDU) includes at least one of explicit indication information for indicating that contention-free access is possible (e.g., 1-bit indication information for distinguishing between contention-based random access and contention-free access for an access type), an access occasion/resource (scheduling information) where contention-free access is possible, and an AS ID, the AIoT device may perform D2R data transmission based on the corresponding access occasion/resource/scheduling (or a resource selected from the corresponding access occasion/resource/scheduling). A response message and/or AIoT data for the corresponding service request received from the corresponding upper layer (e.g., AIoT NAS layer or AIoT data/application layer) may be transmitted to an AIoT reader.

If an AIoT service type (and/or a D2R response/transmission request/need/indication including a device identifier and/or upper layer data) does not require an AIoT service/data response/transmission from an AIoT device (e.g., an AIoT service not requiring D2R data transmission (e.g., a specific command service, Read/Write/Enable/Disable, and/or a case where the device needs to send a confirmation to the reader, but subsequent data transmission is not requested/required)), or if an AIoT service/data/subsequent data response/transmission is indicated as not being required/requested through one or more fields on an R2D MAC PDU, an AIoT random access procedure may be initiated. For example, a random access type (e.g., contention-free or contention-based) and access occasion/resource determination, 16-bit random ID generation, and AIoT MSG1 transmission may be performed. The AIoT MSG1 may transmit a random ID generated by the AIoT device without AIoT data.

Alternatively, D2R data transmission may be performed without using an AIoT random access procedure. As an example, if a MAC PDU for paging (e.g., a paging message including an AIoT service request NAS message or a paging MAC PDU) includes at least one of explicit indication information for indicating that contention-free access is possible, an access occasion/resource (scheduling information) where contention-free access is possible, and an AS ID, the AIoT device may transmit a confirmation message for the corresponding paging message to an AIoT reader based on the corresponding access occasion/resource/scheduling (or a resource selected from the corresponding access occasion/resource/scheduling). A dedicated D2R MAC PDU for the confirmation message may be defined. Alternatively, a response message for the corresponding service request received from the corresponding upper layer (e.g., AIoT NAS layer) may be transmitted to the AIoT reader.

If information for identifying an AIoT device included in a MAC header/subheader does not match information for identifying the AIoT device, the AIoT device (or its MAC layer/entity) may discard/delete/remove the corresponding MAC PDU/SDU.

For AIoT device identification information matching, if an AIoT paging message includes an identifier of a single AIoT device, the AIoT device may consider the identifier to match if the AIoT device identifier included in the AIoT paging message is the same as a single AIoT device identifier configured/stored/calculated/generated/derived/determined at the AIoT device. As an example, if a paging message included a security processed/protected AIoT device identifier for a single device, security processed/protected (ciphered/encrypted/protected) AIoT device identification information may be generated/derived using a security parameter received via the paging message. If the generated/derived security processed/protected (ciphered/encrypted/protected) AIoT device identification information matches the security processed/protected (ciphered/encrypted/protected) AIoT device identification information received via the paging message, the AIoT device may consider itself to be selected.

Alternatively, the AIoT device may consider the identifier to match if the AIoT device identifier included in the AIoT paging message is the same as a group AIoT identifier mapped to the AIoT device. And/or if information/a field (e.g., a field for indicating whether a paging identifier is included/present) for indicating paging/reception for all devices within the corresponding AIoT RAN/reader coverage is included for the corresponding paging MAC PDU or for a downlink MAC PDU or in the corresponding MAC header, and the corresponding field is set to a specific value, or if an AIoT device identification information field is not included in the corresponding AIoT paging message, or if the AIoT device identification information field is set to a specific value (e.g., all 1s or all 0s), all AIoT devices receiving the AIoT paging message may consider that a response is required and thus consider themselves matched/selected.

### Identifier Checking at an Upper (NAS) Layer and a MAC Layer

A MAC header (or a MAC subheader if MAC supports multiplexing) included in a MAC PDU (e.g., a paging MAC message) for an AS (Access Stratum) AIoT service procedure between an AIoT device and an AIoT RAN/reader may include information for identifying an AIoT device. A NAS message/container included in/corresponding to the MAC PDU/SDU may include information for identifying an AIoT device. The information for identifying an AIoT device included in the MAC header and/or the NAS message/container may include at least one of AIoT service type information, information for indicating the inclusion/presence of AIoT device identification information (information for indicating the inclusion/presence of AIoT device identification information and the length information of the corresponding device identification information), a field for indicating whether security processing has been performed (whether a security parameter is included), AIoT device identification information, and a security parameter (e.g., a field for indicating the presence of RAND_Network, a security/privacy protected AIoT device identifier processing type/method, or a field for indicating the security/privacy protected AIoT device identifier processing type/method).

As an example, at least one piece of information for identifying an AIoT device (or AIoT device identification information) included in a MAC header/subheader and at least one piece of information for identifying an AIoT device included in a corresponding NAS message/container may have the same format/size/content.

If information for identifying an AIoT device included in a MAC header/subheader matches (or is the same as) information for identifying the AIoT device (or information for identifying an AIoT device pre-configured in the AIoT device), the AIoT device (or its MAC layer/entity) may forward/transmit the corresponding MAC SDU (and/or information for identifying an AIoT device or AIoT device identification information included in the corresponding MAC PDU/header/subheader) to an upper layer.

(Alternatively, if AIoT device identification information included in a MAC header/subheader matches (or is the same as) AIoT device identification information for the AIoT device, the AIoT device (or its MAC layer/entity) may forward/transmit the corresponding MAC SDU (and/or information for identifying an AIoT device or AIoT device identification information included in the corresponding MAC PDU/header/subheader) to an upper layer.

Otherwise, the corresponding MAC PDU/SDU may be discarded/deleted/removed.

If AIoT device identification information (or security processed/protected AIoT device identification information therefor) within a MAC/NAS message/container included in/corresponding to a received MAC PDU/SDU matches (or is the same as) the AIoT device identification information (or security processed/protected AIoT device identification information therefor) of the AIoT device, the AIoT device (or NAS layer/entity) may perform at least one of the following operations. The order of the following operations represents an example, and they may be performed in any order different from the following order.

Security release/verification/processing/protection on the corresponding AIoT device identification information may be performed using the corresponding AIoT device identification information, a security parameter, payload information in a MAC/NAS message/container, and/or any field information included in the MAC/NAS message. For example, if a paging message included a security processed/protected AIoT device identifier for a single device, security processed/protected (ciphered/encrypted/protected) AIoT device identification information may be generated using a security parameter received via the paging message. If the generated security processed/protected (ciphered/encrypted/protected) AIoT device identification information matches the security processed/protected (ciphered/encrypted/protected) AIoT device identification information received via the paging message, the AIoT device may consider the identifier to match.

If the security processed/protected/released AIoT device identification information matches (or is the same as) the security processed/protected/released AIoT device identification information of the corresponding AIoT device received via a paging message, indication information therefor may be indicated to a lower layer (MAC)/upper layer (AIoT data/application layer).

Payload information in the corresponding MAC/NAS message/container (and/or any field information included in the MAC/NAS message and/or any field information included in the MAC/NAS message/container which has been security released/protected/verified) may be indicated to an upper layer (AIoT data/application layer).

The upper layer may store, as a device variable, at least one of information received from the MAC layer and/or payload information in the corresponding MAC/NAS message/container (and/or any field information included in the MAC/NAS message and/or any field information included in the MAC/NAS message/container or information which has been security released therefor). For example, at least one of the security protected/released/verified AIoT device identification information and a security parameter of the corresponding AIoT device received via a paging message may be stored.

A NAS response message for an AIoT service request message triggered by the corresponding NAS layer/entity may be generated/constructed.

A NAS response message for the corresponding AIoT service request may be generated/constructed.

Indication information about a processing result may be indicated from an AIoT device (or NAS layer/entity) to a lower layer (MAC layer). For example, the indication information may be provided to initiate an AIoT random access procedure. Or, an AIoT random access procedure may be initiated.

Payload information in the corresponding NAS message/container (and/or any field information included in the NAS message) may be indicated to a lower layer (MAC data/application layer).

A response message for the corresponding service request may be received from an (AIoT data/application layer).

A response message for the corresponding request may be indicated to a lower layer by an indication/request from the lower layer.

If AIoT device identification information (or security processed AIoT device identification information therefor) within a NAS message/container included in/corresponding to a received MAC SDU does not match the AIoT device identification information of the AIoT device, the AIoT device (or NAS layer/entity) may discard/delete/remove the corresponding MAC-SDU/NAS message/container. The AIoT device may indicate to the lower layer that the corresponding paging identifier did not match.

To determine whether information for identifying an AIoT device within a MAC/NAS message/container included in/corresponding to a received MAC SDU matches the AIoT device identification information of the AIoT device, an AIoT device (or NAS layer/entity) may perform security protection/release/verification (e.g., protection/cyphering/decyphering/decryption, integrity protection/verification, Message Authentication Code protection/verification and/or hash function) processing on the MAC/NAS message/container (or a specific field included in the MAC/NAS message/container, or AIoT device identification information included in the MAC/NAS message/container). For this, a security parameter included in the MAC/NAS message/container may be used. Alternatively, a pre-configured/indicated security parameter may be used.

As another example, at least one piece of information for identifying an AIoT device (or AIoT device identification information) included in a MAC header/subheader and at least one piece of information for identifying an AIoT device included in a corresponding NAS message/container may have different formats/sizes/contents. As an example, at least one piece of information for identifying an AIoT device included in a MAC header/subheader may represent information on which no arbitrary security/security function has been processed (plaintext), and at least one piece of information for identifying an AIoT device included in a NAS message/container may represent information on which an arbitrary security/security function has been processed (encrypted/security protected).

If information for identifying an AIoT device in a MAC header/subheader matches (or is the same as) information for identifying the AIoT device (or information for identifying an AIoT device pre-configured in the AIoT device), the AIoT device (or its MAC layer/entity) may forward/transmit the corresponding MAC SDU (and/or information for identifying an AIoT device included in the corresponding MAC PDU/header/subheader) to an upper layer.

(Alternatively, if AIoT device identification information included in a MAC header/subheader matches (or is the same as) AIoT device identification information for the AIoT device, the AIoT device (or its MAC layer/entity) may forward/transmit the corresponding MAC SDU (and/or information for identifying an AIoT device included in the corresponding MAC PDU/header/subheader) to an upper layer.

Otherwise, the corresponding MAC PDU/SDU may be discarded/deleted/removed.

An AIoT device (or NAS layer/entity) may perform security protection/release/verification (e.g., protection/cyphering/decyphering/decryption, integrity protection/verification, Message Authentication Code protection/verification and/or hash function) processing on AIoT device identification information (or a specific field in the MAC/NAS message/container) within a MAC/NAS message/container included in/corresponding to a received MAC SDU. If the security protected/released/verified information for the AIoT device identification information (or the specific field in the MAC/NAS message/container) within the MAC/NAS message/container included in/corresponding to the received MAC SDU matches (or is the same as) the AIoT device identification information of the AIoT device (or security protected/released/verified information or information for verifying security processing or AloT device identification information processed for protection/release/verification according to a pre-configured parameter), the AIoT device (or NAS layer/entity) may perform at least one of the following operations. The order of the following operations may be any order different from the order below.

Indication information therefor may be indicated to an upper layer (AIoT data/application layer).

Payload information in the corresponding MAC/NAS message/container (and/or any field information included in the MAC/NAS message and/or any field information included in the MAC/NAS message/container which has been security protected/released/verified) may be indicated to an upper layer (AIoT data/application layer). If security protection/release/verification fails, the corresponding MAC/NAS message/container, MAC PDU/SDU may be discarded/deleted/removed. The AIoT device may indicate to a lower layer.

One or more pieces of information among information received from the MAC layer and/or payload information in the corresponding MAC/NAS message/container (and/or any field information included in the MAC/NAS message and/or any field information included in the MAC/NAS message/container (or information which has been security protected/released/verified using the information)) may be stored as a device variable.

A NAS response message for the corresponding NAS request message may be generated/constructed. Security processing may be performed on the corresponding NAS response message (or a field included in the corresponding NAS response message or AIoT device identification information included in the corresponding NAS response message). The corresponding NAS response message may include at least one of AIoT service type information, AIoT device identification information, and a security parameter.

A NAS response message for the corresponding AIoT service request may be generated/constructed. Security protection/release/verification processing may be performed on the corresponding NAS response message (or a field included in the corresponding NAS response message or information for identifying an AIoT device included in the corresponding NAS response message).

The corresponding NAS response message (or a D2R MAC message including the corresponding NAS response message) may include at least one of AIoT service type information, AIoT device identification information, and a security parameter. As an example, a NAS response message for the corresponding AIoT service request or a D2R MAC message including the NAS response message for the corresponding AIoT service request may include at least one of AloT device identification information and security parameter information. As an example, it may include security protected/encrypted AIoT device identification information for the corresponding AIoT device identification information (e.g., a temporary device identifier which is security protected/encrypted, generated based on a random number (RAND_Network) received from the core network and a device identifier). Alternatively, it may include a security parameter used for security protection/processing for the corresponding AIoT device. The security parameter may include at least one of a verification value/result value/response value (RES: Result / XRES: Expected Result) generated/derived at an AIoT device and a random number (RAND_Device) generated/derived at an AIoT device.

Indication information about whether AIoT device identification information matches may be indicated to a lower layer (MAC layer). For example, the indication information may be provided to initiate an AIoT random access procedure.

Initiation of an AIoT random access procedure may be indicated.

Payload information in the corresponding NAS message/container (and/or any field information included in the NAS message) may be indicated to a lower layer (MAC data/application layer).

A response message for the corresponding service request may be received from an (AIoT data/application layer).

A response message for the corresponding request may be indicated to a lower layer by an indication/request from the lower layer.

If security protected/released/verified information for AIoT device identification information (or a specific field in the MAC/NAS message/container) within a MAC/NAS message/container included in/corresponding to a received MAC SDU does not match information for identifying the AIoT device (or information which has been security protected/released/verified or information for verifying security processing), the AIoT device (or NAS layer/entity) may discard/delete/remove the corresponding MAC-SDU/NAS message/container.

To determine whether information for identifying an AIoT device within a MAC/NAS message/container included in/corresponding to a received MAC SDU matches information for identifying the AIoT device, an AIoT device (or NAS layer/entity) may perform security protection/release/verification (e.g., protection/cyphering/decyphering/decryption, integrity protection/verification, Message Authentication Code protection/verification and/or hash function) processing on the MAC/NAS message/container (or a specific field included in the MAC/NAS message/container, or AIoT device identification information included in the MAC/NAS message/container). For this, a security parameter included in the MAC/NAS message/container may be used.

The corresponding indication information and/or the corresponding AIoT device identification information may be forwarded to a lower layer.

Hereinafter, another embodiment of the present disclosure will be described.

An application function/application server may request an AIoT service (e.g., an inventory procedure or a command procedure) from an AIoTF. At this time, the application function/application server may transmit information necessary for the AIoT service operation. The corresponding information may be at least one of AIoT service type information (e.g., inventory or command (e.g., read, write, enable, disable)), information for AIoT RAN/Reader selection, the expected/estimated/inferred number of target AIoT devices for the service, and the expected/estimated/inferred size of a D2R response message for the service request.

An AIoTF may determine AIoT device identification information included in a paging message on an AIoT radio interface based on information received from an application function. An AIoTF may transmit an AIoT service request message (e.g., an inventory request message or a command request message) to an AIoT RAN. The corresponding AIoT service request message may be transmitted between the AIoTF and the AIoT RAN via an AMF. As an example, it may be transmitted via an interface between the AIoTF and the AMF (e.g., Nz interface) and an interface between the AMF and the AIoT RAN (e.g., N2/NG interface). The corresponding AIoT service request message may be transmitted between the AIoT RAN and the AMF via NGAP. Alternatively, a (direct) interface between the AIoTF and the AIoT RAN (e.g., Nx interface) may be defined, and it may be transmitted by defining an application protocol provided via the corresponding interface (e.g., NxAP) (or a service-based interface protocol between the AIoTF and the AIoT RAN or an application protocol on top of the service-based interface protocol between the AIoT RAN and the AIoT RAN) on that interface.

An AIoT RAN/Reader may perform an AIoT procedure (e.g., a procedure performed in the Access Stratum between the AIoT RAN/Reader and an AIoT device) with the AIoT device via an AIoT radio interface. For this, the AIoT RAN/Reader may transmit an AIoT paging message to the AIoT device. For an AIoT device to effectively distinguish and process an AIoT service request procedure of an Access Stratum upper layer (e.g., AIoT NAS, AIoT data/application) and/or an AIoT procedure of an access layer (e.g., Access stratum or PHY/MAC), the following methods may be used.

For example, a paging message may request an AIoT service from an AloT device via a downlink NAS message.

An AIoTF may generate a NAS message for an AIoT service request based on information received from an application function. The corresponding NAS message corresponds to a NAS message processed in a NAS layer/entity of an AIoTF and an AIoT device. The corresponding NAS message may include at least one of AIoT service type information, AIoT device identification information, and a security parameter.

Here, the AIoT service type information may distinguish at least one of an inventory service/operation (or distinguishing at least one of an inventory service/operation for a single device, an inventory service/operation for a group of devices, an inventory service/operation for a plurality of devices, and an inventory service/operation for all devices via a corresponding field), a command service/operation (or distinguishing at least one of a command service/operation for a single device, a command service/operation for a group of devices, a command service/operation for a plurality of devices, and a command service/operation for all devices via a corresponding field), and a Read/Write/Enable/Disable service/operation (or distinguishing at least one of a Read/Write/Enable/Disable service/operation for a single device, a Read/Write/Enable/Disable service/operation for a group of devices, a Read/Write/Enable/Disable service/operation for a plurality of devices, and a Read/Write/Enable/Disable service/operation for all devices via a corresponding field).

As an example, (for the corresponding paging MAC PDU or for a downlink MAC PDU or in the corresponding MAC header) 1 bit may be used as information for distinguishing an AIoT service type to distinguish an inventory service/operation and a command service/operation. 2 bits may be used as information for distinguishing an additional service type for the command service/operation to distinguish a Read/Write/Enable/Disable service/operation. An AIoT device may ignore the information for distinguishing an additional service type when the AIoT service type is set to inventory. Alternatively, when the AIoT service type is set to inventory, the information for distinguishing an additional service type may be set to a reserved value and used to support forward compatibility in the future.

As another example, 3 bits may be used as information for distinguishing an AIoT service type to distinguish an inventory/Read/Write/Enable/Disable service/operation. The remaining 3 values out of 8 values may be set to reserved values and used to support forward compatibility in the future.

As another example, to support forward compatibility, 2 bits may be used as information for distinguishing an AIoT service type to distinguish an inventory service/operation and a command service/operation. 2 bits may be used as information for distinguishing an additional service type for the command service/operation to distinguish a Read/Write/Enable/Disable service/operation. 1 bit (2 values) of reserved values for distinguishing the AIoT service type may be used to support the addition of AIoT services/operations later. Alternatively, 1 bit may be used as information for distinguishing an AIoT service type, and the addition of AIoT services/operations later may be distinguished by adding a separate field for distinguishing the corresponding MAC PDU version/release/format/service type version, etc.

As another example, to support forward compatibility, 2 bits may be used as information for distinguishing an AIoT service type to distinguish an inventory service/operation and a command service/operation. If the information for distinguishing the AIoT service type is set to a command service/operation, a MAC header may include an additional 2 bits as information for distinguishing an additional service type to distinguish a Read/Write/Enable/Disable service/operation. If the information for distinguishing the AIoT service type is set to an inventory service/operation, a MAC header may be configured without the 2-bit field for distinguishing an additional service type.

As another example, (for the corresponding paging MAC PDU or for a downlink MAC PDU or in the corresponding MAC header) a corresponding MAC PDU (protocol) version/release/format/service type version field may be included to support forward compatibility.

As another example, (for the corresponding paging MAC PDU or for a downlink MAC PDU or in the corresponding MAC header) 1 bit may be used as information for indicating whether it is a single/plurality (group) device (or, a single/plurality (group) device identifier) to distinguish them. For example, if information for indicating whether a paging MAC PDU includes a single/plurality (group) device (or, a single/plurality (group) device identifier) is set to a specific value (1 or 0), the corresponding MAC PDU may be made to include a single/plurality (group) device identifier. In the case of a group identifier, a value for distinguishing a single device and a value for distinguishing a group device may be used distinguishably within the value for distinguishing a single device (or a single device identifier). For example, a bit value for distinguishing a single device and a bit value for distinguishing a group device may be used as different values. In the case of an AIoT device, the AIoT device may check whether a terminal identifier included in a paging message matches its own single device identifier and/or a group device identifier to which it belongs. If the terminal identifier included in the paging message matches one or more of its own single device identifier and a group device identifier to which it belongs, the AIoT device may perform a random access procedure with an AIoT base station/reader.

As another example, (for the corresponding paging MAC PDU or for a downlink MAC PDU or in the corresponding MAC header) if an AIoT device identification information field is included, a specific value for the corresponding AIoT device identification information (e.g., all 1s or all 0s) may be used as information for indicating paging for all devices within the corresponding AIoT RAN/reader coverage.

As another example, (for the corresponding paging MAC PDU or for a downlink MAC PDU or in the corresponding MAC header) information/a field for indicating/distinguishing whether it is paging/reception for all devices within the corresponding AIoT RAN/reader coverage may be included. The information/field may be provided by defining a physical channel distinct from the PRDCH, provided through scrambling via a specific identifier within the PRDCH, provided by adding the corresponding field within the corresponding MAC PDU/header, or provided by defining a field for distinguishing the corresponding MAC PDU/header.

As another example, (for the corresponding paging MAC PDU or for a downlink MAC PDU or in the corresponding MAC header) a paging message for all devices within the corresponding AIoT RAN/reader coverage (e.g., a paging MAC PDU) and a paging message for a single/group of devices within the corresponding AIoT RAN/reader coverage (e.g., a paging MAC PDU) may be defined to have different formats. For example, a paging message for a single/group of AIoT devices may include an AIoT device identification information field (and/or an information field for identifying an AIoT device) within the corresponding paging MAC PDU (or the corresponding paging MAC header or a NAS message/container included in the corresponding paging message). On the other hand, a paging message for all AIoT devices may be configured not to include an AIoT device identification information field (and/or an information field for identifying an AIoT device) within the corresponding paging MAC PDU (or the corresponding paging MAC header or a NAS message/container included in the corresponding paging message). The paging message format for a single/group of AIoT devices and the paging message format for all AIoT devices may be distinguished through at least one of information for distinguishing the corresponding MAC PDU within the corresponding MAC header, information for distinguishing the corresponding MAC PDU format, a specific bit in information for distinguishing that the corresponding MAC PDU is a paging message, logical channel identification information included in the corresponding MAC PDU, PDU-type/data type identification information included in the corresponding MAC PDU, and service type information included in the corresponding MAC PDU.

As another example, (for the corresponding paging MAC PDU or for a downlink MAC PDU or in the corresponding MAC header) 2 bits may be used as information for distinguishing at least one of a single device, a plurality of devices, a group of devices, and all devices within the corresponding AIoT RAN/reader coverage.

As another example, in the case of a group identifier, information for indicating whether it is a single/plurality of devices (or, a single/plurality of device identifiers) may be set to a single device, and if applicable, an additional field for distinguishably indicating a group device identifier may be included. If the information for indicating whether it is a single/plurality of devices (or, a single/plurality of device identifiers) is set to a plurality of devices, a MAC header may be configured without an additional field for distinguishably indicating a group device identifier.

As another example, if the corresponding paging MAC PDU indicates paging for all devices via information/a field for indicating/distinguishing whether it is paging/reception for all devices, and/or if an AIoT device identification information field is not included (for the corresponding paging MAC PDU or for a downlink MAC PDU or in the corresponding MAC header), the AIoT device may discard information for indicating whether it is a single device or a plurality of devices (or a single device identifier or a plurality of device identifiers) (inclusion).

As another example, 2 bits may be used as information for distinguishing an AIoT service type to distinguish at least one of an inventory service/operation for a single device, an inventory service/operation for a plurality of devices, a command service/operation for a single device, and a command service/operation for a plurality of devices. 2 bits may be used as information for distinguishing an additional service type for the command service/operation to distinguish a Read/Write/Enable/Disable service/operation.

As another example, 4 bits (16 values) may be used as information for distinguishing an AIoT service type to distinguish an inventory/Read/Write/Enable/Disable service/operation for a single device and an inventory/Read/Write/Enable/Disable service/operation for a plurality of devices.

AIoT device identification information may represent AIoT device identification information (e.g., paging identification information) included in an NxAP (or a service-based interface protocol between an AIoTF and an AIoT RAN or an application protocol on top of a service-based interface protocol between an AIoTF and an AIoT RAN/reader)/NGAP message between an AIoTF and an AIoT RAN, or AIoT device identification information used in a NAS (Non-Access Stratum) layer/entity of an AIoTF and an AIoT device. The AIoT device identification information may represent at least one of a full permanent Ambient IoT Device Identifier configured in an AIoT device, a part of an Ambient IoT Device Identifier, the entirety of a permanent AIoT device identifier which has been security (e.g., privacy-protection/cyphering/encryption, integrity protection, Message Authentication Code, hash function and/or device authentication) protected/processed/released/verified, a part of a permanent AIoT device identifier which has been security protected/processed/released/verified, and/or a temporary code/identifier calculated/generated/derived/determined through security protection/processing/release/verification for the corresponding AIoT device (or a full/partial permanent AIoT device identifier), a code associated with the corresponding AIoT device (or a full/partial permanent AIoT device identifier), and filtering/mask information for determining/extracting AIoT device identification information. A permanent AIoT device identifier may be allocated by an operator or a 3rd party. The permanent AIoT device identifier may include one of a network identifier (e.g., Mobile Country Code (MCC) + Mobile Network Code (MNC) and/or Network Identifier (NID)) or information used to identify a 3rd party. The permanent AIoT device identifier may include information used to distinguish different AIoT devices within a network identifier (e.g., MCC+MNC and/or NID) or information used to identify a 3rd party (e.g., Electronic Product Code (EPC) or other local/internal identification information). In any signaling process, one or more pieces of AIoT device identification information may be used for a single AIoT device. For example, information used to identify a network identifier (e.g., MCC+MNC and/or NID) or a 3rd party may be used as first AIoT device identification information, and information used to distinguish different AIoT devices within the network identifier (e.g., MCC+MNC and/or NID) or information used to identify a 3rd party (e.g., EPC (Electronic Product Code) or other local/internal identification information) may be used as second AIoT device identification information. At least one of the first AIoT device identification information and the second AIoT device identification information (or at least one of the entirety/part of the first AIoT device identification information and the entirety/part of the second AIoT device identification information) may be security protected/processed/released/verified and transmitted/received. (e.g., first AIoT device identification information (plaintext), second AIoT device identification information (ciphertext) or vice versa)
A security parameter may represent at least one of a key, key identification information, a fresh value, a counter, a token, a verification value/result value/response value (RES: Result / XRES: Expected Result), a random parameter (RAND generated by the network, RAND generated by the device), an algorithm, and device credential/profile information used at an AIoTF and/or an AIoT device for security (e.g., privacy-protection/cyphering/encryption, integrity protection, Message Authentication Code, hash function and/or device authentication) protection/processing/release/verification for a full/partial permanent AIoT device identifier.

An AIoTF may transmit an NxAP/NGAP message including a NAS message for an AIoT service (e.g., inventory or command) request to an AIoT RAN. For example, an AIoTF may transmit a security processed/protected message for an AIoT NAS message to a RAN/reader. The corresponding (NxAP/NGAP) request message may include, in addition to the corresponding NAS message, at least one of the corresponding AIoT device identification information included in a paging message, the expected/estimated/inferred number of target AIoT devices for the service, and the expected/estimated/inferred size of a D2R response message for the service request.

As an example, an AIoT RAN/reader may transmit a paging message (or an R2D message) including a NAS message for an AIoT service request to an AIoT device. The corresponding paging message may be transmitted to the AIoT device via a PRDCH by a specific downlink/R2D MAC PDU (or MAC Control element or Paging MAC PDU). An AIoT device may receive the corresponding MAC PDU via the PRDCH. A downlink/R2D MAC PDU (or MAC Control element or Paging MAC PDU) including a paging message may include explicit indication information/a field within the MAC PDU to distinguish it. Alternatively, a downlink/R2D MAC PDU (or MAC Control element or Paging MAC PDU) including a paging message may be implicitly distinguished through the presence of an arbitrary field/field combination included in the corresponding MAC PDU.

For example, the paging MAC PDU may be indicated by including at least one of information for indicating whether a NAS message/container/security is included/processed for an AIoT service request, association/identification information for one AIoT service request received from a core network, information for indicating whether a paging message is included, information for distinguishing a MAC PDU format for paging, and information for distinguishing an AIoT service type. The corresponding MAC PDU may be indicated to include/represent a paging message through at least one of an AIoT service type, information for indicating whether it is the first message for the corresponding AIoT service type, AIoT device identification information, AIoT RAN/reader identification information, information for indicating whether a NAS message/container is included, and information for indicating whether an AS ID (Access Stratum Identifier) is included/applied.

As another example, a message for paging transmitted by an AIoT RAN/reader to an AIoT device may be configured not to include a NAS message/container received from an AIoTF. For example, when an AIoT RAN/reader transmits a message for paging including indication information for contention-based random access for the corresponding AIoT device, the corresponding message may be configured not to include a NAS message/container received from an AIoTF. Subsequently, a NAS message/container received from an AIoTF may be included in an AIoT MSG2 and/or R2D data transmission. The corresponding paging message may be transmitted to the AIoT device via a PRDCH by a specific downlink/R2D MAC PDU (or MAC Control element or Paging MAC PDU). An AIoT device may receive the corresponding MAC PDU via the PRDCH. A downlink/R2D MAC PDU (or MAC Control element or Paging MAC PDU) including a paging message may include explicit indication information/a field within the MAC PDU to distinguish it. Alternatively, a downlink/R2D MAC PDU (or MAC Control element or Paging MAC PDU) including a paging message may be implicitly distinguished through the presence of an arbitrary field/field combination included in the corresponding MAC PDU. For example, the corresponding MAC PDU may be indicated tto include/represent a paging message through at least one of an AIoT service type, information for indicating whether it is the first message for the corresponding AIoT service type, AIoT device identification information, AIoT RAN/reader identification information, and information for indicating whether an AS ID is included/applied.

As another example, an AIoT RAN/reader may transmit a paging message to an AIoT device via a paging logical channel/MAC-PDU for an AIoT service request. A logical channel identifier/MAC-PDU-identifier/distinguishing information for distinguishing the corresponding paging logical channel/MAC-PDU may be defined. The corresponding MAC PDU (or MAC Control element or Paging MAC PDU) may be transmitted to an AIoT device via a PRDCH including the corresponding logical channel identifier/MAC-PDU-identifier/distinguishing indication information. An AIoT device may receive the corresponding MAC PDU via the PRDCH.

Here, information for indicating whether an AS ID is included/applied represents information for indicating whether an AS (Access Stratum) identifier used for (at least) D2R scheduling and R2D reception purposes is included/applied. The AS ID may be one of a random ID included in a first D2R message (or AIoT message1 (MSG1)) or an ID allocated to a device by a reader. A subsequent R2D message including the corresponding information may include the corresponding AS ID so that the corresponding device may distinguish and use the message transmitted to itself via the corresponding AS ID.

As another example, a paging message may include a security parameter for an AIoT device. The location of such information may be configured. For example, authentication for an AIoT device may be performed when authentication is triggered by the network for an inventory procedure and a command procedure. For example, an AIoTF may receive a random number (e.g., a 128-bit RAND) for the corresponding AIoT device generated by a corresponding core network node (e.g., AIoT Data Management, ADM) from the corresponding core network node and transmit it to a RAN/reader via an inventory request. The RAN/reader may include the corresponding random number in a paging message. As another example, a security/privacy protected temporary identifier may be used during an inventory procedure for AIoT device identification information protection. The security/privacy protected temporary identifier may be generated based on a key shared between an AIoT device and a corresponding core network node (e.g., ADM) (e.g., K_AIoT). When using a security/privacy protected temporary identifier, an AIoTF may transmit information for indicating a (security/privacy protected) temporary identifier processing type/method to a RAN/reader via an inventory request message. Information for indicating a temporary identifier processing type/method (e.g., information for indicating a security processing type for AIoT device identification information) may indicate whether a security/privacy protected temporary identifier is a concealed type or a stored type. And/or information for indicating a temporary identifier processing type/method may indicate whether the temporary identifier is a concealed type protected by a stored temporary identifier, a concealed type protected by a permanent identifier, or a stored type. And/or information for indicating a temporary identifier processing type/method may include information for indicating whether the stored T-ID type shall be updated with or without a command. A paging message may include a security/privacy protected temporary identifier and information for indicating a security/privacy protected temporary identifier processing type.

For an ultra-low-complexity AIoT device, it is desirable to effectively define the number of bits required for a security parameter.

As an example, by making authentication mandatory for all inventory procedures, a field for indicating the presence of a security parameter for authentication (e.g., presence of a random number (e.g., a 128-bit RAND)) (or whether authentication is performed) may be excluded from an R2D paging message. A paging message may always include a security parameter for authentication (e.g., a random number (e.g., a 128-bit RAND)).

As another example, authentication for an AIoT device may be performed when authentication is selectively triggered by the network. A paging message may include a field (e.g., 1 bit) for indicating the presence of a security parameter for authentication (e.g., presence of a random number (e.g., a 128-bit RAND)) (or whether authentication is performed). If a security parameter for authentication exists, the corresponding field may be set to a specific value (e.g., presence 1, absence 0 or presence 0, absence 1), and security parameter information for authentication may be included in a subsequent field.

As another example, AIoT device identification information protection/security processing may be performed selectively. A paging message may include a field (e.g., 1 bit) for indicating the presence of a security/privacy protected temporary identifier processing type/method (or whether a security/privacy protected temporary identifier is used). If protection/security processing for AIoT device identification information is applied/performed (or if security/privacy protected temporary identifier processing type/method information exists), the corresponding field may be set to a specific value (e.g., presence 1, absence 0 or presence 0, absence 1), and a security/privacy protected temporary identifier processing type/method may be included in a subsequent field. The security/privacy protected temporary identifier processing type/method may indicate, via 2 bits, whether the temporary identifier is a concealed type protected by a stored temporary identifier (e.g., whether a temporary identifier is generated with a stored temporary identifier as a P0 input), a concealed type protected by a permanent identifier (e.g., whether a temporary identifier is generated with an AIoT permanent identifier as a P0 input), or a stored type. And/or the security/privacy protected temporary identifier processing type/method may include, via an additional 1 bit, information for indicating whether the stored T-ID type shall be updated with or without a command.

As another example, in a paging message, a security parameter for authentication (or AIoT identifier security/privacy protection) (e.g., a field for indicating the presence of a random number (or whether authentication is performed), a security parameter for authentication (or AIoT identifier security/privacy protection), a field for indicating the presence of a security/privacy protected temporary identifier processing type/method (or whether a security/privacy protected temporary identifier is used), and/or a security/privacy protected temporary identifier processing type/method field is used to derive another security parameter (e.g., a result value/response value/verification value (RES), an expected result value/expected response value/expected verification value (XRES: Expected Result)) in response to a determination of whether an AIoT device identification information matches or when a response is determined based on the AIoT device identification information, according to whether the AIoT device identification information matches in a NAS layer. As such, since whether the AIoT device identification information matches needs to be processed with priority, the paging message may include a field for indicating the presence of an AIoT device identifier (paging ID), paging ID length, paging ID length (8 bits), a field for indicating the presence of a security/privacy protected temporary identifier processing type/method (or whether a security/privacy protected temporary identifier is used) after the AIoT device identifier (paging ID), and/or a security/privacy protected temporary identifier processing type/method field. Alternatively, it may include the fields in the order of AIoT device identifier (paging ID), information for indicating the presence of paging ID length, paging ID length (8 bits), a field for indicating the presence of a security/privacy protected temporary identifier processing type/method (or whether a security/privacy protected temporary identifier is used), a security/privacy protected temporary identifier processing type/method field, and AIoT device identifier (paging ID).

As another example, since security processing for authentication may be performed after determining whether AIoT device identification information matches, priority processing may be applied, and the paging message may include the fields in the order of AIoT device identifier (paging ID), information for indicating the presence of paging ID length, paging ID length (8 bits), AIoT device identifier (paging ID), a field for indicating the presence of a security/privacy protected temporary identifier processing type/method (or whether a security/privacy protected temporary identifier is used), a security/privacy protected temporary identifier processing type/method field, a security parameter for authentication (e.g., a field for indicating the presence of a random number (or whether authentication is performed)), and a security parameter for authentication. Alternatively, it may include the fields in the order of AIoT device identifier (paging ID), information for indicating the presence of paging ID length, paging ID length (8 bits), a field for indicating the presence of a security/privacy protected temporary identifier processing type/method (or whether a security/privacy protected temporary identifier is used), a security/privacy protected temporary identifier processing type/method field, AIoT device identifier (paging ID), a security parameter for authentication (e.g., a field for indicating the presence of a random number (or whether authentication is performed)), and a security parameter for authentication.

As another example, a paging message used when Contention Free Access (CFA) is indicated to an AIoT device the paging message may include the fields in the order of paging ID length, AIoT device identifier (paging ID), a field for indicating the presence of a security/privacy protected temporary identifier processing type/method (or whether a security/privacy protected temporary identifier is used), a security/privacy protected temporary identifier processing type/method, a security parameter for authentication (e.g., a field for indicating the presence of a random number (or whether authentication is performed)), and a security parameter for authentication field. Alternatively, it may include the fields in the order of paging ID length, a field for indicating the presence of a security/privacy protected temporary identifier processing type/method (or whether a security/privacy protected temporary identifier is used), a security/privacy protected temporary identifier processing type/method field, AIoT device identifier (paging ID), a security parameter for authentication (e.g., a field for indicating the presence of a random number (or whether authentication is performed)), and a security parameter for authentication.

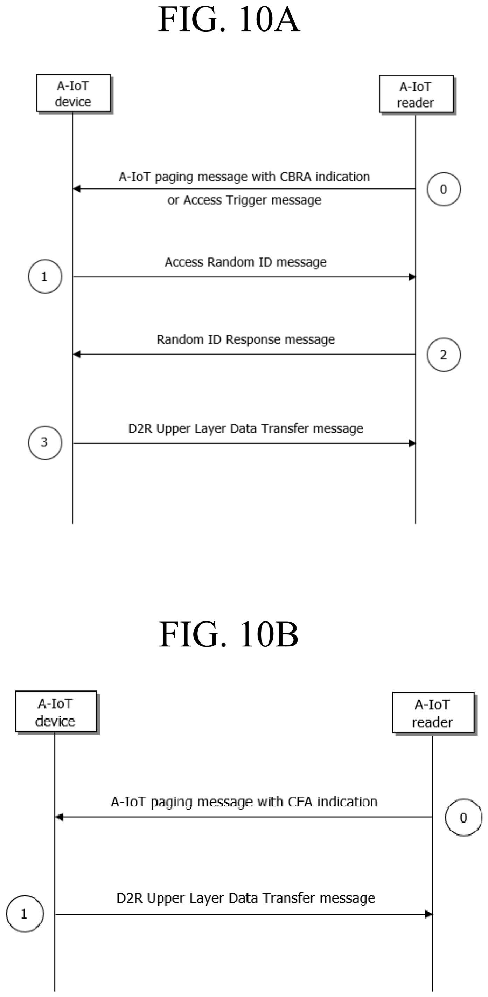

FIGS. 10A to 10B illustrate A-IoT access procedures to which one embodiment of the present specification may be applied.

The main services and functions of the A-IoT MAC layer are as follows:
- Paging;
- Access;
- Transfer of upper layer data;
- Construct MAC PDUs to be mapped onto D2R transport blocks and delivered to the physical layer;
- MAC padding;
- D2R segmentation;
- Process MAC PDUs from R2D transport blocks delivered from the physical layer;
- Failure detection.

### A-IoT Paging

A-IoT paging allows an A-IoT reader to trigger A-IoT CBRA or A-IoT CFA for one, multiple, or all A-IoT devices. The A-IoT paging message is transmitted on the PRDCH. An A-IoT paging message may include zero or one paging identifier. The paging identifier may be an A-IoT Device Permanent Identifier or filtering information. If the paging identifier is included, the paging message may be transmitted to a specific A-IoT device or a group of A-IoT devices. If the paging identifier is not included, the A-IoT paging message may be transmitted to all A-IoT devices. Additionally, the A-IoT paging message provides configuration for the A-IoT access procedure.

### A-IoT Access Procedure

For A-IoT access, both an A-IoT contention-based random access (CBRA) procedure and an A-IoT contention-free access (CFA) procedure are supported. When an A-IoT device is paged, the A-IoT device initiates one of the A-IoT CBRA procedure or the A-IoT CFA procedure according to an explicit instruction included in an A-IoT paging message.

In the case of CBRA (FIG. 10A), the A-IoT device randomly selects one access occasion among access occasions configured in the A-IoT paging message. In order to determine the start of the selected access occasion, the A-IoT device may monitor an Access Trigger message and transmits an A-IoT MSG1 (Access Random ID message) in the selected access occasion. The start of a first A-IoT MSG1 resource set is directly indicated by the A-IoT paging message instead of the Access Trigger message.

After transmitting the A-IoT MSG1, the device monitors an A-IoT MSG2 (Random ID Response message) until a configured number of Access Trigger messages or a subsequent A-IoT paging message is received. That is, any A-IoT MSG2 received thereafter is not processed.

When the A-IoT MSG2 includes a frequency index (if present) matching the frequency index used for the MSG1 transmission and includes the same Random ID as transmitted in the MSG1, the A-IoT device considers that contention resolution is successful. Otherwise, the device considers that contention resolution has failed. When the contention resolution is successful, the device transmits a D2R Upper Layer Data Transfer message using resources provided in the A-IoT MSG2. When the contention resolution fails, if an A-IoT paging message having the same transaction ID is received, the device performs re-access.

In the case of CFA (FIG. 10B), the A-IoT device transmits the D2R Upper Layer Data Transfer message using a dedicated resource provided in the A-IoT paging message. In this case, monitoring of the Access Trigger message is not required.

According to an embodiment, an A-IoT device in a wireless communication system receives a paging message including first AIoT (Ambient IoT) device identification information, and forwards the first AIoT device identification information included in the paging message to an upper layer. Further, the device receives, from the upper layer, an indication regarding whether the first AIoT device identification information matches. Here, the paging message includes a specific field, and based on the specific field, the first AIoT device identification information may be forwarded to the upper layer.

The specific field may indicate presence of the first AIoT device identification information in the paging message.

At the upper layer, whether the first AIoT device identification information matches may be checked. Based on a result of the checking, an indication regarding whether the first AIoT device identification information matches may be received.

Meanwhile, the paging message may further include a security parameter. Here, the first AIoT device identification information may include one of permanent AIoT device identification information, first security-protected identification information, and filtering information, and second security-protected identification information may be generated using the security parameter.

The matching of the first AIoT device identification information may be a matching between the first security-protected identification information and the second security-protected identification information.

Based on reception of the indication regarding whether the first AIoT device identification information matches, the device may initiate contention-based random access or contention-free access. To this end, the paging message may further include information indicating the contention-based random access or the contention-free access.

Thereafter, the device may transmit an upper layer message, and the upper layer message may include at least one of second AIoT device identification information and a security parameter calculated by the device.

The embodiments described up to now may be implemented through various means. For example, the embodiments may be implemented by hardware, firmware, software, or a combination thereof. Details will be described with reference to the accompanying drawings.

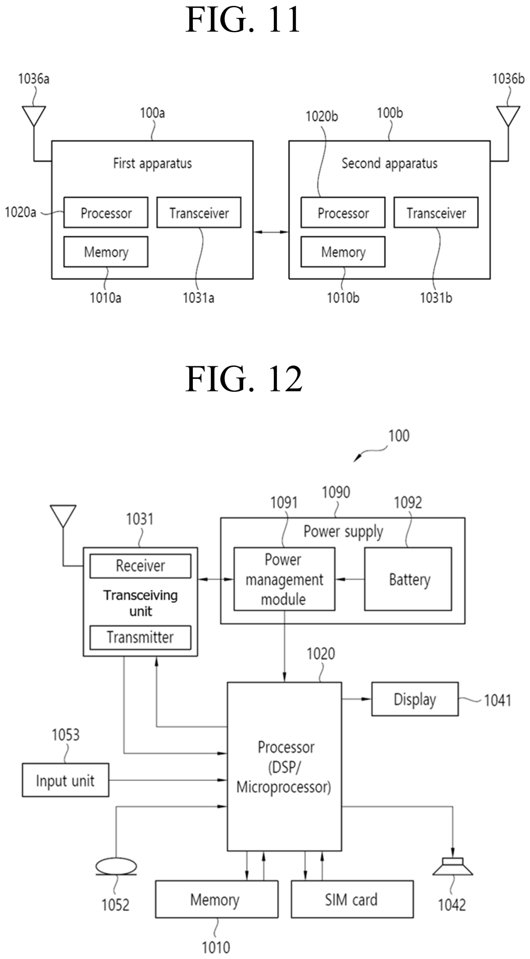

**FIG. 11** **is a block diagram showing apparatuses according to an embodiment of the disclosure.**

Referring to FIG. 11, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medical apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medical apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 103 1a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a, and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 12** **is a block diagram showing a terminal according to an embodiment of the disclosure.**

In particular, FIG. 12 illustrates the previously described apparatus of FIG. 11 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some constituent elements are referred to as a unit in the disclosure. However, the embodiments are not limited thereto. For example, such term "unit" may also refer to a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Applet, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

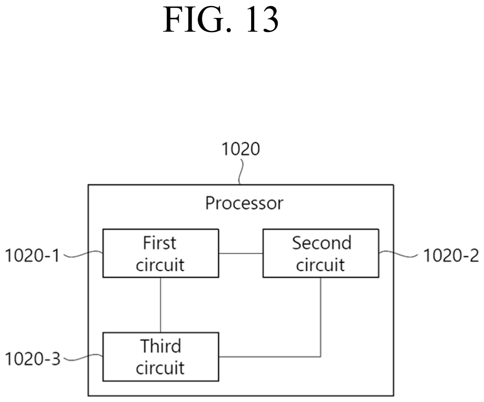

**FIG. 13** **is a block diagram of a processor in accordance with an embodiment.**

Referring to FIG. 13, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

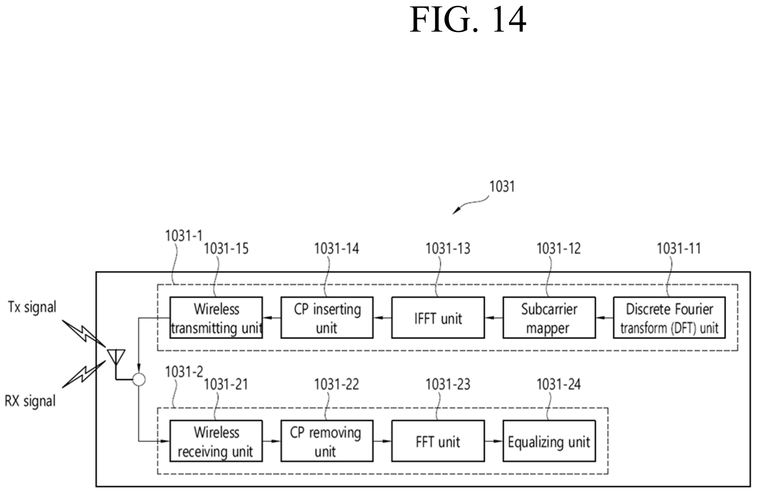

**FIG. 14** **is a detailed block diagram of a transceiver of a first apparatus shown in** **FIG. 11** **or a transceiving unit of an apparatus shown in** **FIG. 12****.**

Referring to FIG. 14, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some constituent elements are referred to as a unit in the disclosure. However, the embodiments are not limited thereto. For example, such term "unit" may also refer to a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, ambient IoT device communication may be controller effectively in a wireless communication system.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method for operating a device in a wireless communication system, the method comprising:
receiving a paging message including first ambient internet of things (AIoT) device identification information;
forwarding the first AIoT device identification information included in the paging message to an upper layer; and
receiving, from the upper layer, an indication regarding whether the first AIoT device identification information matches,
wherein the paging message includes a predetermined field, and, the first AIoT device identification information is forwarded to the upper layer based on the predetermined field.

2. The method of claim 1, wherein the predetermined field indicates a presence of the first AIoT device identification information in the paging message.

3. The method of claim 1, further comprising:
checking, at the upper layer, whether the first AIoT device identification information matches,
wherein the indication regarding whether the first AIoT device identification information matches is received based on a result of the checking.

4. The method of claim 3, wherein the paging message further includes a security parameter.

5. The method of claim 4, wherein the first AIoT device identification information includes at least one of permanent AIoT device identification information, first security-protected identification information, and filtering information, and
wherein second security-protected identification information is generated using the security parameter.

6. The method of claim 5, wherein the checking of the first AIoT device identification information includes determining whether the first security-protected identification information matches the second security-protected identification information.

7. The method of claim 1, further comprising:
initiating either contention-based random access or contention-free access based on reception of the indication regarding whether the first AIoT device identification information matches.

8. The method of claim 7, wherein the paging message further includes information indicating the contention-based random access or the contention-free access.

9. The method of claim 1, further comprising:
transmitting an upper layer message,
wherein the upper layer message includes at least one of second AIoT device identification information and a security parameter calculated by the device.

10. A device in a wireless communication system, comprising:
at least one processor; and
at least one memory configured to store instructions and operably electrically connectable to the at least one processor,
wherein operations performed based on the instructions executed by the at least one processor comprise:
receiving a paging message including first ambient internet of things (AIoT) device identification information;
forwarding the first AIoT device identification information included in the paging message to an upper layer; and
receiving, from the upper layer, an indication regarding whether the first AIoT device identification information matches,
wherein the paging message includes a predetermined field, and, the first AIoT device identification information is forwarded to the upper layer based on the predetermined field.

11. The device of claim 10, wherein the predetermined field indicates a presence of the first AIoT device identification information in the paging message.

12. The device of claim 10, wherein operations performed based on the instructions executed by the at least one processor comprise:
checking, at the upper layer, whether the first AIoT device identification information matches,
wherein the indication regarding whether the first AIoT device identification information matches is received based on a result of the checking.

13. The device of claim 12, wherein the paging message further includes a security parameter.

14. The device of claim 13, wherein the first AIoT device identification information includes at least one of permanent AIoT device identification information, first security-protected identification information, and filtering information, and
wherein second security-protected identification information is generated using the security parameter.

15. The device of claim 14, wherein the checking of the first AIoT device identification information includes determining whether the first security-protected identification information matches the second security-protected identification information.
